# EUROPEAN PATENT APPLICATION

(11) **EP 4 804 529 A1**
(43) Date of publication of application: **09.09.2026**
(21) Application number: 25305288.0
(22) Date of filing: 04.03.2025
(51) Int. Cl.: H04N 19/55, H04N 19/563, H04N 19/577

(54) **ILLUMINATION CORRECTION FOR PREDICTION BASED ON OUT OF BOUNDARY (OOB) REFERENCE**

(71) Applicant: InterDigital CE Patent Holdings, SAS, 75017 Paris (FR)
(72) Inventor: BORDES, Philippe, 35890 LAILLE (FR); GALPIN, Franck, 35235 THORIGNE-FOUILLARD (FR); LE LEANNEC, Fabrice, 35830 BETTON (FR); RATH, Gagan Bihari, 35000 RENNES (FR)
(74) Representative: Vossius & Partner Patentanwälte Rechtsanwälte mbB

(57) **Abstract**

In one implementation, a method of video encoding or decoding is provided, comprising: obtaining a block to be encoded or decoded; predicting a first part of the block based on uni-directional motion compensation and a second part of the block based on bi-directional motion compensation to form a prediction block for the block, wherein the bi-directional motion compensation is based on a first reference block and a second reference block, and wherein the uni-directional motion compensation is based on the second reference block; adjusting a first part of the prediction block based on the first and second reference blocks; and encoding or decoding the block based on the prediction block.

## Description

### BACKGROUND

The present application is related to bi-directional motion compensation in video encoding and decoding.

### BRIEF SUMMARY

Briefly stated, in one embodiment, a method of video encoding is presented, comprising: obtaining a block to be encoded; predicting a first part of the block based on uni-directional motion compensation and a second part of the block based on bi-directional motion compensation to form a prediction block for the block, wherein the bi-directional motion compensation is based on a first reference block and a second reference block, and wherein the uni-directional motion compensation is based on the second reference block; adjusting a first part of the prediction block based on the first and second reference blocks; and encoding the block based on the prediction block.

According to another embodiment, a method of video decoding is presented, comprising: obtaining a block to be decoded; predicting a first part of the block based on uni-directional motion compensation and a second part of the block based on bi-directional motion compensation to form a prediction block for the block, wherein the bi-directional motion compensation is based on a first reference block and a second reference block, and wherein the uni-directional motion compensation is based on the second reference block; adjusting a first part of the prediction block based on the first and second reference blocks; and decoding the block based on the prediction block.

According to another embodiment, an apparatus for video encoding is presented, comprising one or more processors and at least one memory coupled to the one or more processors, wherein the one or more processors are configured to: obtain a block to be encoded; predict a first part of the block based on uni-directional motion compensation and a second part of the block based on bi-directional motion compensation to form a prediction block for the block, wherein the bi-directional motion compensation is based on a first reference block and a second reference block, and wherein the uni-directional motion compensation is based on the second reference block; adjust a first part of the prediction block based on the first and second reference blocks; and encode the block based on the prediction block.

According to another embodiment, an apparatus for video decoding is presented, comprising one or more processors and at least one memory coupled to the one or more processors, wherein the one or more processors are configured to: obtain a block to be decoded; predict a first part of the block based on uni-directional motion compensation and a second part of the block based on bi-directional motion compensation to form a prediction block for the block, wherein the bi-directional motion compensation is based on a first reference block and a second reference block, and wherein the uni-directional motion compensation is based on the second reference block; adjust a first part of the prediction block based on the first and second reference blocks; and decode the block based on the prediction block.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings. In the drawings:
FIG. 1 is a block diagram illustrating an example system according to one or more embodiments of the present disclosure;
FIG. 2 is a block diagram illustrating an example video encoder according to one or more embodiments of the present disclosure;
FIG. 3 is a block diagram illustrating an example video decoder according to one or more embodiments of the present disclosure;
FIG. 4 illustrates some samples of a reference block exceeding the reference picture limits/boundaries;
FIG. 5 illustrates bi-directional motion compensation when some samples of a reference block exceed the reference picture limits/boundaries;
FIG. 6 illustrates illumination correction of OOB prediction part with parameters computed on OOB frontier, according to one or more embodiments of the present disclosure;
FIG. 7 illustrates a process of enhanced bi-directional motion compensation with illumination correction, according to one or more embodiments of the present disclosure;
FIG. 8 illustrates an example of corner case of enhanced bi-directional motion compensation with illumination correction process, where R0 and R1 have separated OOB parts, according to one or more embodiments of the present disclosure;
FIG. 9 illustrates an example of corner case of enhanced bi-directional motion compensation with illumination correction process, where R0 and R1 have overlapping OOB parts, according to one or more embodiments of the present disclosure;
FIG. 10 illustrates an example of corner case of enhanced bi-directional motion compensation with illumination correction process, where one OOB part is non-rectangular, according to one or more embodiments of the present disclosure;
FIG. 11 illustrates an example of enhanced bi-directional motion compensation with illumination correction process, where the parameters are computed per sub-block, according to one or more embodiments of the present disclosure;
FIG. 12 illustrates an example of enhanced bi-directional motion compensation with illumination correction process, where the sub-blocks may have different motion values and the parameters may be propagated between sub-blocks, according to one or more embodiments of the present disclosure; and
FIG. 13 illustrates an example of enhanced bi-directional motion compensation with illumination correction process, where the sub-blocks may have different motion values and the illumination correction parameters may be computed for all the sub-blocks, according to one or more embodiments of the present disclosure; and
FIG. 14 illustrates an example of sub-block temporal motion vector prediction, where some sub-block(s) are uni-directional motion compensated and other sub-block(s) are bi-directional motion compensated, according to one or more embodiments of the present disclosure.

### DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

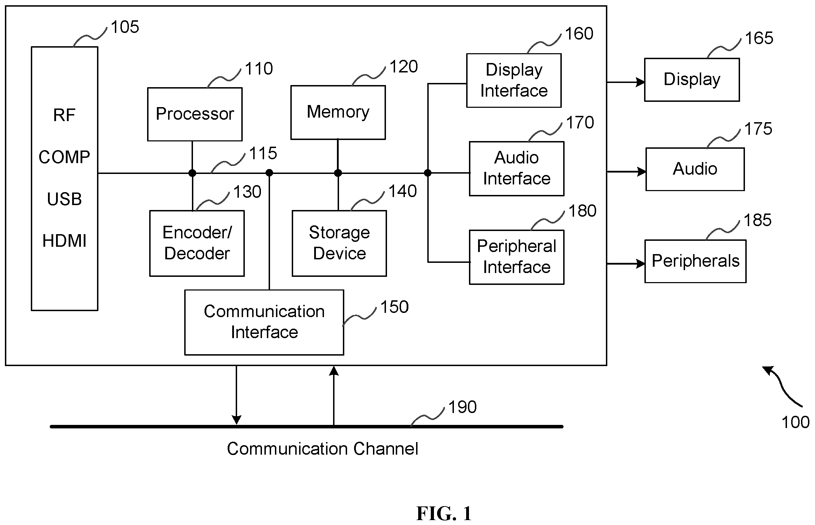

Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 includes at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 includes at least one memory 120, for example, a volatile memory device and/or a non-volatile memory device. The system 100 includes a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 includes an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 is used to store instructions and/or provide working memory for video encoding and decoding functions. In some embodiments, memory external to the processor 110 and/or the encoder/decoder module 130 (e.g., the memory 120 and/or the storage device 140) is used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 includes a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

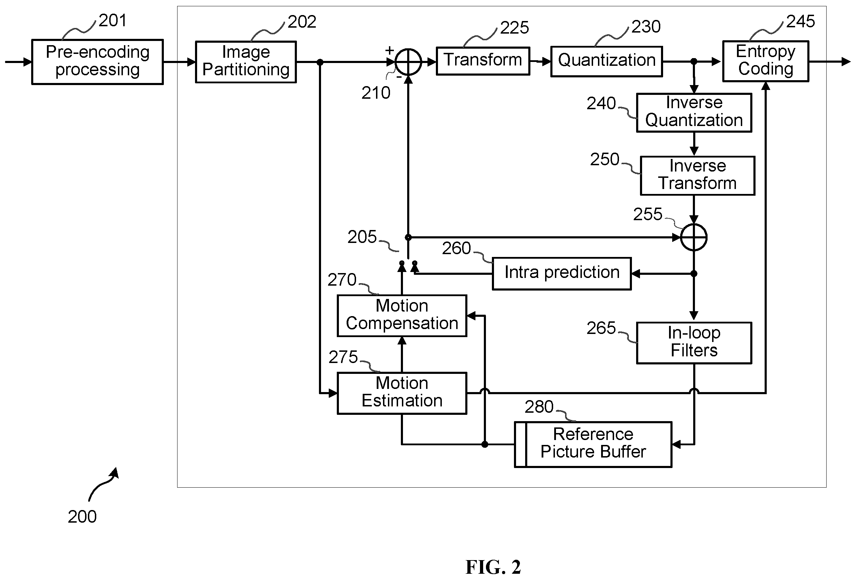

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (VVC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

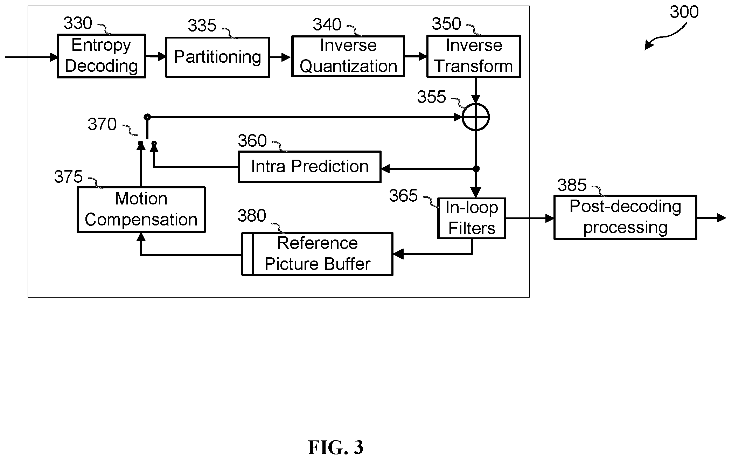

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, Y, and chroma components, U and V (also denoted herein by C).

Referring generally to FIG. 2 and the video encoder 200, video data (e.g., one or more video frames) is encoded generally as described below. Prior to encoding, video data may be preprocessed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU includes a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (i.e., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (reconstruct) respective residual blocks. Depending on the selected prediction mode, a predicted block can be obtained at 370 from an intra predictor 360 (i.e., intra prediction) or from a motion compensator 375 (i.e., inter prediction) and may be enhanced (e.g., filtered) by a prediction enhancer 390, generating a prediction block. The reconstructed residual blocks are combined with prediction blocks (e.g., by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (385) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

### Enhanced bi-directional motion compensation with OOB

In ECM 15 (Enhanced Compression Model 15), in case of inter prediction, the prediction of the current block (410) is built with motion compensation of a reference block (420) with the same size in the reference picture (440). The position of the reference block in the reference picture is determined with a motion vector MV which is the relative position of the reference block in the reference picture versus the position of the current block in the current picture (430).

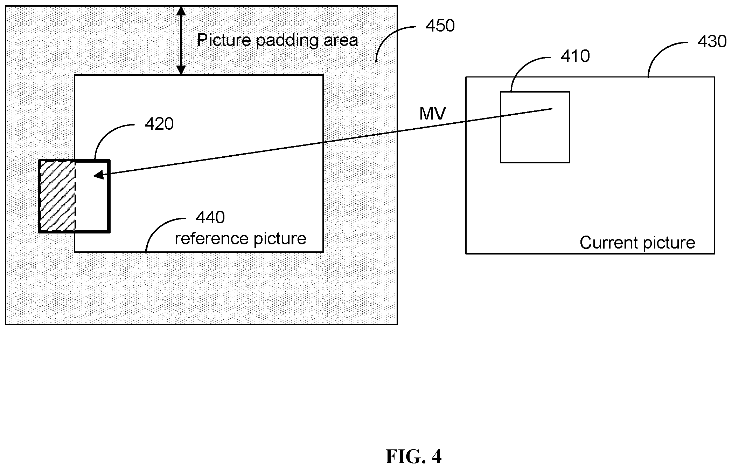

It may happen that some samples of the reference block exceed the reference picture limits/boundaries as depicted in FIG. 4 and the samples of the reference block outside the reference picture limit are undetermined. In the following, we will denote such a block as an "Out Of Boundary (OOB) reference block". An OOB reference block may be avoided by constraining the value of the MV to be inside the reference picture boundaries, but the performance of the inter-prediction may be reduced. A preferred solution is to pad the reference picture with a padding area (450).

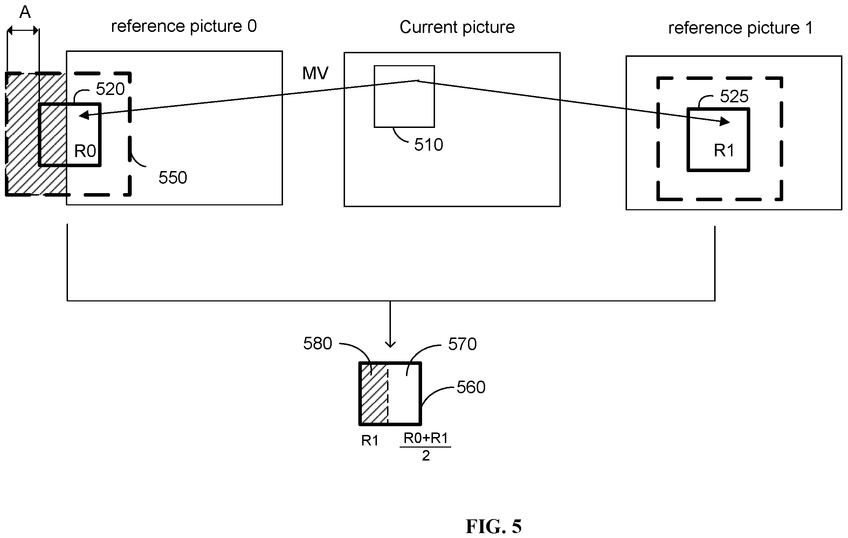

However, padding the reference picture requires additional memory for storage in the decoded pictures buffer (DPB). Then a preferred solution is to perform the padding "on-the-fly" (see FIG. 5) using a temporary buffer (550) of the same size as the reference block, possibly complemented with additional area (A), for example, corresponding to the half number of interpolation filter taps.

Several methods of picture padding exist, for example replication padding, motion compensated padding or template matching padding. Among these, replication padding is more appropriate for "on-the-fly" methods because of its simplicity.

In an article by Yi-Wen Chen, et al., entitled "EE2: Enhanced bi-directional motion compensation (test 2.2)," document JVET-Z0136, 26th Meeting, by teleconference, 20-29 April 2022, an enhanced bi-directional motion compensation with OOB is proposed. In case bi-prediction (bi-directional prediction) is used for a current block (510), if one reference is OOB (e.g., reference block 0 R0 in FIG. 5, 520) and the other is not OOB (e.g., reference block 1 R1 in FIG. 5, 525), the bi-prediction (560) samples P(x) at position (x) in the non-OOB part (570) will be set to B(x)=(R0(x)+R1(x))/2 (regular bi-prediction) and the bi-prediction (560) samples P(x) at position (x) in the OOB part (580) will be set to R1(x), where R1(x) is the uni-prediction (uni-directional prediction) sample values at position (x) in the OOB and non-OOB part, and R0(x) is the uni-prediction sample values at position (x) in the non-OOB part. Similarly, in case of weighted averaged bi-prediction, the bi-prediction samples in the non-OOB part (570) will be set to B(x) = (w0.R0(x) + w1.R1(x))/(w0 + w1) (regular weighted bi-prediction) and the prediction samples in the OOB part (580) will be set to R1(x).

Note here the current block (510) is within the current picture. However, for ease of reference, we denote the portion (580) of the current (prediction) block (560) that corresponds to (collocates with) the OOB part of the reference block also as OOB, and the portion of the current block (570) that corresponds to the non-OOB part of the reference block also as non-OOB.

In case of enhanced bi-directional motion compensation with OOB, it may happen that the (average) illumination of the OOB part is different from the non-OOB part, which may generate artificial line transition in the prediction at the frontier between the OOB part and non-OOB part. This issue may reduce the benefit of enhanced bi-directional motion compensation with OOB.

In one embodiment, we propose to improve the enhanced bi-directional motion compensation with OOB technique with illumination correction. Special adaptations in some corner cases are then described. Further, we also describe methods to derive the illumination correction per sub-block.

### Enhanced bi-directional motion compensation with illumination correction

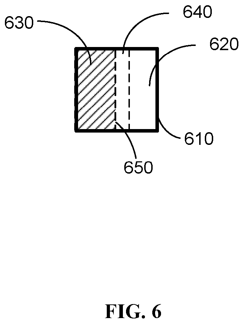

In one embodiment, we propose to adjust the prediction samples P(x) of the OOB part (630) based on a correction model with correction parameters derived with samples of the non-OOB part, as illustrated in FIG. 6 for predicting the current block (610). For example, the correction parameter is an offset computed on the non-OOB part(s) (640) and added to the prediction samples of the OOB part(s). In another example, the correction is modeled with a linear function corr(x) = a.R1(x)+b, where (a, b) are the parameters. The adjusted prediction sample is denoted as P'(x). Without loss of generality, we assume that reference block 0 exceeds the picture boundary. If it is reference block 1 that exceeds the picture boundary, we only need to replace R1(x) in Eqs. (3)-(5) with R0(x). $if x ∈ OOB : P ′ \left(x\right) = P \left(x\right) + corr \left(x\right)$ $else : P ′ \left(x\right) = P \left(x\right) = B \left(x\right) = \left(R0\left(x\right)+R1\left(x\right)\right) / 2$

For example, when the offset is used as the correction parameter: $if x ∈ OOB : P ′ \left(x\right) = P \left(x\right) + offset = R 1 \left(x\right) + offset$

The offset may be computed with samples in a region R (640) of non-OOB part close to the OOB frontier (650). $offset \left(R\right) = \left({\sum }_{x ∈ R} \left(B\left(x\right)-R1\left(x\right)\right)\right) / n \left(R\right)$ where:
- R is a region (640) of non-OOB part which are close to the OOB frontier (650),
- offset(R) is the offset computed with the region R (640),
- n(R) is the number of samples in R,
- B(x) is the bi-prediction at position (x) in the region R (640),
- R0(x) is the uni-prediction from reference block 0 at position (x) in the region R (640), and
- R1(x) is the uni-prediction from reference block 1 at position (x) in the region R (640).

In another example when a linear model is used for illumination correction: $if x ∈ OOB : P ′ \left(x\right) = P \left(x\right) + a . P \left(x\right) + b = \left(a+1\right) . R 1 \left(x\right) + b$

The parameters (a, b) may be computed with samples in a region R (640) of non-OOB part close to the OOB frontier (650). For example, this can be achieved using an MSE (Mean Squared Error) minimization algorithm between bi-prediction samples of the region R and the adjusted uni-prediction samples, P'(x): ${min}_{\left(a, b\right)} {\sum }_{x ∈ R} {\left(B\left(x\right)-\left(a+1\right).R1\left(x\right)-b\right)}^{2} .$

Other model may also be used, for example any polynomial function of higher order "n": $corr \left(x\right) = {a}_{n} . {x}^{n} + ⋯ . + {a}_{1} . x + {a}_{0} .$

The region R (640) is a subset of the non-OOB part. For example, it may be one or several (e.g., 4) column(s) (and/or one or several line(s)) of samples adjacent to the OOB frontier (650), or the full non-OOB part (620).

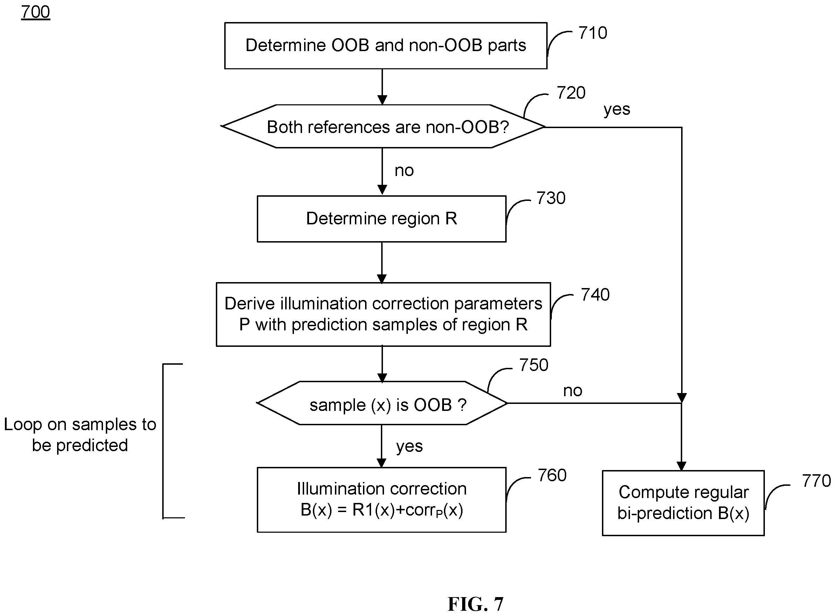

FIG.7 depicts the derivation of the enhanced bi-prediction with OOB with illumination correction, according to an embodiment. The method can be applied on both the encoder or decoder. First, for each reference, the encoder or decoder determines the position of the reference block in the reference picture using the motion vector and if the reference block is OOB or non-OOB (710). If two reference blocks R0 and R1 are non-OOB (720), then regular bi-prediction samples are computed (770). If at least one reference is OOB, then at step (730) the encoder or decoder determines the OOB part (630), the non-OOB part (620) and the region R (640). At step (740), the illumination correction parameters are derived using the prediction samples (e.g., B(x) and R1(x)) of the region R. Next, the bi-prediction samples of the non-OOB part (750) are derived with the regular bi-prediction expression (770), whereas the prediction samples of the OOB part (750) are derived with uni-prediction expression with the illumination correction model (760).

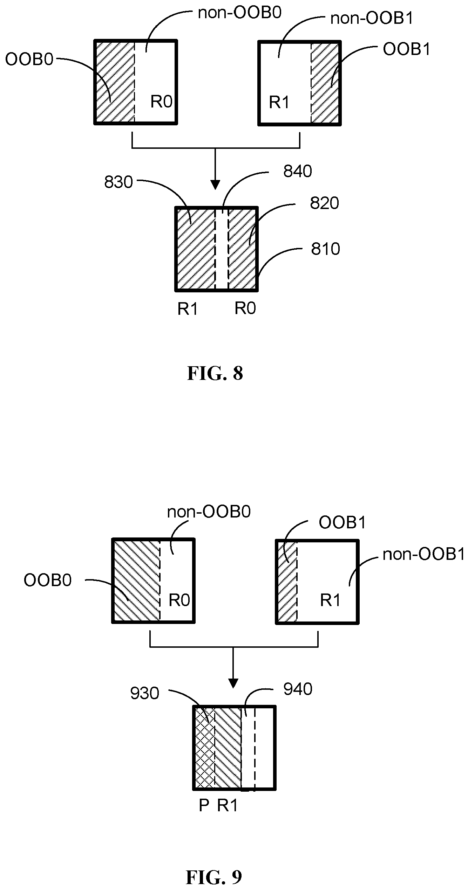

It may happen that both reference blocks for the current block (810) are OOB. If the OOB frontier is not located at the same location for reference 0 and 1, one may still use illumination correction on the portion where at least one part is not OOB if it is contiguous to a region with non-OOB samples (840). In this case, one may use R1 with illumination correction parameters O1 (e.g., computed with samples in region (840)) in the region non-OOB1 and OOBO (830), and one may use R0 with illumination correction parameters O0 (e.g., computed with samples in region (840)) in the region non-OOBO and OOB1 (820). An example is depicted in FIG. 8.

Another comer case is depicted in FIG. 9 where one may use R1 in the region non-OOB1 and OOBO computing illumination parameters for R1 with non-OOB region 940, whereas in the region P where both references are OOB (930) one may use traditional padding such as replication padding for example.

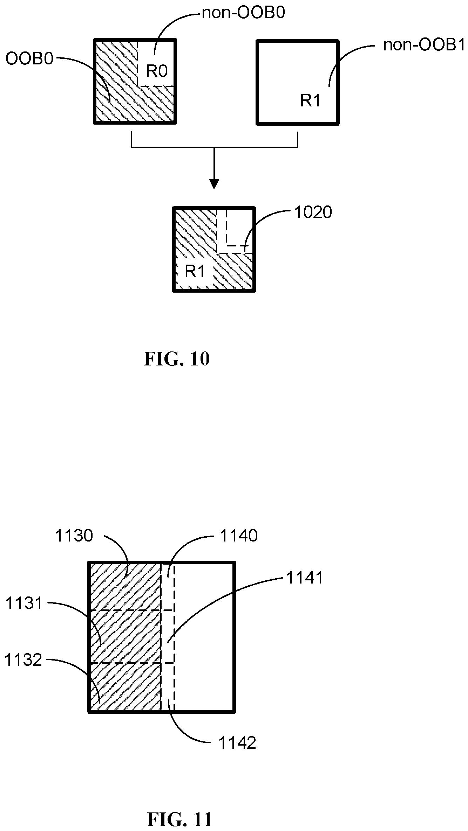

Another corner case is depicted in FIG. 10 where the reference block 0 is situated at the bottom-left corner of the reference picture. Then OOBO is non-rectangular, and the region used to compute the R1 illumination compensation parameters may be non-rectangular too (1020) as depicted in FIG. 10.

In another embodiment, we may derive the illumination correction value (parameters) per sub-regions as illustrated in FIG. 11. The current and the reference blocks may be sub-divided into several sub-blocks (1130, 1131, 1132), along the OOB frontier direction. One parameter(s) is derived for each sub-block. Similarly, the region used to compute the parameters with the non-OOB reference may be sub-divided into several sub-regions (1140, 1141, 1142). The sub-regions may overlap.

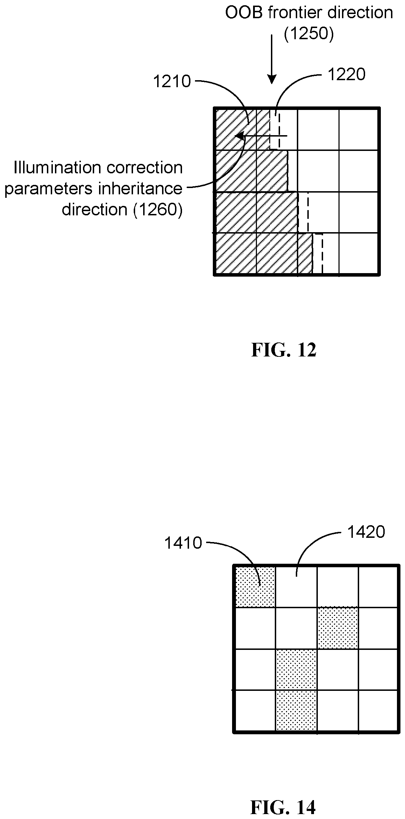

In another embodiment, the prediction is made per sub-block. The sub-blocks in the block may have different motion vectors but same reference picture as for the case of decoder-side motion vector refinement (DMVR), bi-directional optical flow (BDOF) or sub-block affine prediction modes for example. Since each sub-block may have different motion vector and therefore point to different reference sub-blocks in the reference picture, then the OOB frontier may be located at different position in some sub-blocks, as depicted in FIG. 12. In case of the predictions of the sub-block has OOB and non-OOB parts (1220), then the derivation of the illumination correction parameters may be carried out similarly as previous embodiments. In case of the sub-block does not include non-OOB parts because both reference blocks are OOB (1210), it may inherit the illumination correction parameters from another sub-block (where correction parameters have been derived). In a variant, the illumination correction parameters are inherited in a direction perpendicular to the OOB frontier. For example, in FIG.12, the OOB frontier is vertical (1250), the sub-block (1210) inherits illumination correction parameters from the closest sub-block (1220) in a direction perpendicular to the OOB frontier (1260).

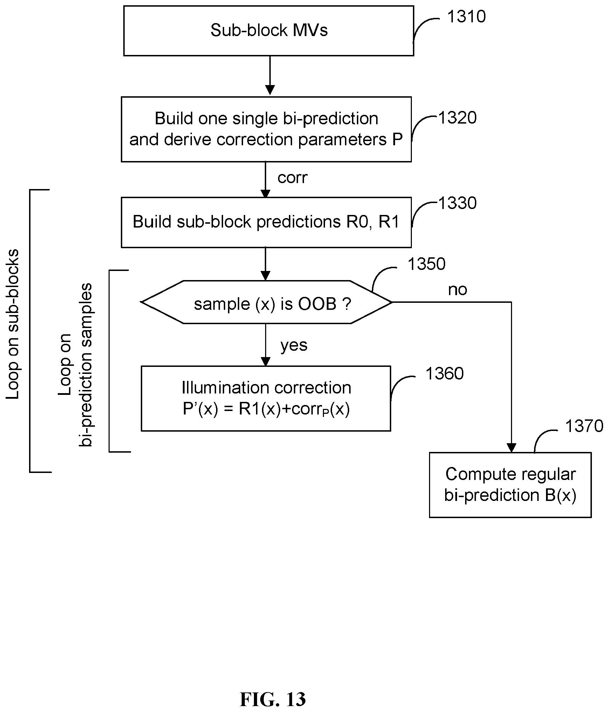

However, this embodiment may require computing the sub-block predictions in an order which is function of the OOB edge directions and/or the location of the sub-blocks where the parameters can be derived. Alternatively, one may derive the non-OOB sub-blocks part before computing the OOB sub-block parts. To cope with this issue, in another embodiment depicted in FIG.13, one may first derive the illumination correction parameters based on a temporary bi-prediction for the full block (1320) containing a single OOB frontier. This may be achieved by using one single pair of motion vectors (e.g., average of all the sub-block MVs pairs (1310)) for the whole block. Then the full-block prediction will be made of one non-OOB part and one OOB part and the illumination correction parameter may be derived (1320) with a region of the non-OOB part, as depicted in previous embodiment. Then for each sub-block, we may build (1330) sub-block predictions R0 and R1 and determine which portion is OOB or non-OOB. For the non-OOB part (1350), regular bi-prediction is used (1370). For the OOB part (1350), the uni-prediction is adjusted (1360) based on the illumination correction model derived for the full block.

More generally, illumination correction methods as described above can be applied when one part of a prediction block is based on uni-directional motion compensation, and another part of the prediction block is based on bi-directional motion compensation. For example, in case of sub-block TMVP (sub-block temporal motion vector prediction), the current block is sub-divided into sub-blocks and each sub-block is predicted using the collocated motion vector stored with the collocated reference picture, as depicted in FIG. 14. Then it may happen that some sub-blocks are predicted with uni-directional motion compensation (1410) whereas other sub-blocks may be predicted with bi-direction motion compensation (1420), depending on the value of the collocated MV(s) for each sub-block. Here, the bi-directional motion compensation is based on two reference blocks, and the uni-directional motion compensation is based on one of these two reference blocks. To reduce the possible transition artifacts between these different parts, illumination correction can be applied to obtain a smooth transition using the illumination correction model.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs. 2 and 3 may be implemented as one or more modules and modified according to the various embodiments of the present disclosure.

The various embodiments described herein provide at least the following features, devices or aspects, alone or on any combination, across various claim categories and types:
i. Encoding, into coded video data, syntax elements that can enable the decoder to decode the coded video data, according to any of the embodiments described herein.
ii. A bitstream that includes one or more of the described syntax elements, or variations thereof, whether transmitted, stored, or otherwise made available.
iii. Creating, transmitting, receiving, and/or decoding of the bitstream.
iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:
i. session description protocol (SDP), for example as described in RFCs and/or used in conjunction with real-time transport protocol (RTP) transmission.
ii. hypertext transfer protocol (HTTP) live Streaming (HLS) manifest transmitted over HTTP.
iii. dynamic adaptive streaming over HTTP (DASH) media presentation description (MPD) descriptors, for example as used in DASH and transmitted over HTTP.
iv. RTP header extensions, for example as used during RTP streaming.
v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter is used for both encoding and decoding. **In** some embodiments, the signaling may be explicit, such that information (e.g., a particular parameter) is transmitted to the decoder enabling the decoder to use the same particular parameter. **In** some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), a bit savings is thus realized in some embodiments. **In** some embodiments, one or more syntax elements or flags are used to signal information to a decoder. While the preceding relates to the verb form of the word "signal", the word "signal" can also be used herein as a noun.

**In** some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

1. A method of video encoding, comprising:
obtaining a block to be encoded;
predicting a first part of the block based on uni-directional motion compensation and a second part of the block based on bi-directional motion compensation to form a prediction block for the block, wherein the bi-directional motion compensation is based on a first reference block and a second reference block, and wherein the uni-directional motion compensation is based on the second reference block;
adjusting a first part of the prediction block based on the first and second reference blocks; and
encoding the block based on the prediction block.

2. A method of video decoding, comprising:
obtaining a block to be decoded;
predicting a first part of the block based on uni-directional motion compensation and a second part of the block based on bi-directional motion compensation to form a prediction block for the block, wherein the bi-directional motion compensation is based on a first reference block and a second reference block, and wherein the uni-directional motion compensation is based on the second reference block;
adjusting a first part of the prediction block based on the first and second reference blocks; and
decoding the block based on the prediction block.

3. An apparatus for video encoding, comprising one or more processors and at least one memory coupled to the one or more processors, wherein the one or more processors are configured to:
obtain a block to be encoded;
predict a first part of the block based on uni-directional motion compensation and a second part of the block based on bi-directional motion compensation to form a prediction block for the block, wherein the bi-directional motion compensation is based on a first reference block and a second reference block, and wherein the uni-directional motion compensation is based on the second reference block;
adjust a first part of the prediction block based on the first and second reference blocks; and
encode the block based on the prediction block.

4. An apparatus for video decoding, comprising one or more processors and at least one memory coupled to the one or more processors, wherein the one or more processors are configured to:
obtain a block to be decoded;
predict a first part of the block based on uni-directional motion compensation and a second part of the block based on bi-directional motion compensation to form a prediction block for the block, wherein the bi-directional motion compensation is based on a first reference block and a second reference block, and wherein the uni-directional motion compensation is based on the second reference block;
adjust a first part of the prediction block based on the first and second reference blocks; and
decode the block based on the prediction block.

5. The method of claim 1 or 2, or the apparatus of claim 3 or 4, wherein the first part of the prediction block for the block is adjusted based on the first and second reference blocks corresponding to a region of the second part of the block.

6. The method of any one of claims 1, 2 and 5, or the apparatus of any one of claims 3-5, wherein the first reference block is in a first reference picture for the block and the first reference block exceeds at least a picture boundary of the first reference picture, wherein the first part of the prediction block corresponds to a part of the first reference block exceeding the picture boundary of the first reference picture, and wherein a second part of the prediction block corresponds to a remaining part of the first reference block and is predicted based on bi-directional motion compensation.

7. The method of any one of claims 1, 2, 5 and 6, or the apparatus of any one of claims 3-6, wherein the first part of the prediction block is adjusted by a set of parameters, the set of parameters including at least one of an offset and a scaling value.

8. The method of claim 7, or the apparatus of claim 7, wherein the set of parameters is based on an average difference between predicted values of the bi-directional motion compensation and uni-directional predicted values of samples in the region, and wherein the uni-direction predicted values are based on the second reference block.

9. The method of any one of claims 1, 2 and 5-8, or the apparatus of any one of claims 3-8, wherein the second reference block exceeds at least a picture boundary of the second reference picture and an exceeding portion of the second reference block corresponds to a subset of the remaining part of the first reference block, and wherein a third part of the prediction block corresponds to the exceeding portion of the second reference block and is predicted based on the first reference block.

10. The method of any one of claims 1, 2 and 5-8, or the apparatus of any one of claims 3-8, wherein the second reference block exceeds at least a picture boundary of the second reference picture and an exceeding portion of the second reference block overlaps with the first part of the first reference block, and wherein a third part of the prediction block corresponds to the overlapping portion and is predicted based on reference sample padding.

11. The method of any one of claims 1, 2 and 5-10, further comprising, or the apparatus of any one of claims 3-10, wherein the one or more processors are further configured to perform:
dividing the first part of the prediction block into a plurality of partitions, wherein a set of correction parameters is obtained for each one of the plurality of partitions.

12. The method of claim 11, or the apparatus of claim 11, wherein the region of the second part of the prediction block is also divided into a plurality of sub-regions.

13. The method of claim 12, or the apparatus of claim 12, wherein one of the plurality of sub-regions overlaps with another one of the plurality of sub-regions.

14. The method of any one of claims 1, 2 and 5-13, or the apparatus of any one of claims 3-13, wherein the block is a first sub-block of another block, the another block further including at least a second sub-block, wherein both reference blocks for the second sub-block exceed picture boundaries, further comprising:
inheriting a set of parameters, from the first sub-block, to adjust a prediction for the second sub-block.

15. The method of any one of claims 1, 2 and 5-13, or the apparatus of any one of claims 3-13, wherein the block is a first sub-block of another block, the another block further including a plurality of sub-blocks, further comprising:
obtaining a motion vector for the another block based on motion vectors for the plurality of sub-blocks, wherein a first part of the another block is predicted by uni-directional motion compensation and a second part of the another block is predicted by bi-directional motion compensation; and
obtaining a set of parameters for the another block to adjust the first part of a prediction block for the another block, wherein the first part of the prediction block for the first sub-block is adjusted based on the set of parameters for the another block.
